# EUROPÄISCHE PATENTSCHRIFT

(11) **EP 4 103 329 B1**
(45) Veröffentlichungstag und Bekanntmachung des Hinweises auf die Patenterteilung: **21.02.2024**
(21) Anmeldenummer: 21701626.0
(22) Anmeldetag: 05.01.2021
(51) Int. Cl.: B02C 4/42

(54) **DREHMOMENTSTÜTZE ZUM ABFANGEN VON ANTRIEBSMOMENTEN UND WALZENANORDNUNG MIT EINER DREHMOMENTSTÜTZE**
TORQUE REACTION MEMBER FOR ABSORBING DRIVE TORQUES, AND ROLL ARRANGEMENT WITH A TORQUE REACTION MEMBER
BIELLE DE RÉACTION DESTINÉE À INTERCEPTER UN COUPLE D'ENTRAÎNEMENT ET ENSEMBLE ROULEAUX MUNI D'UNE BIELLE DE RÉACTION

(30) Priorität: 13.02.2020 DE 102020103823
(43) Veröffentlichungstag der Anmeldung: 21.12.2022
(73) Patentinhaber: Matthews International Corporation, Pittsburgh, Pennsylvania 15212 (US)
(72) Erfinder: WOLTERS, René, 48703 Stadtlohn (DE)
(74) Vertreter: Angerhausen, Christoph
(86) Internationale Anmeldenummer: PCT/DE2021/100000
(87) Internationale Veröffentlichungsnummer: WO 2021/160200

(56) Entgegenhaltungen:
- DE-U1- 8 712 742

## Beschreibung

Die Erfindung betrifft eine Drehmomentstütze zum Abfangen von Antriebsmomenten zumindest eines Wellenantriebs, mit einem Wellenantrieb und mit zwei ersten Kraftleitelementen, die jeweils mit einem ersten Ende des Wellenantriebs drehbar und voneinander beabstandet fixiert sind, und mit einem von dem Wellenantrieb beabstandet angeordneten Abstützelement, an welchem die ersten Kraftleitelemente jeweils mit einem zweiten, dem ersten jeweils gegenüberliegenden Ende jeweils drehbar und voneinander beabstandet fixiert sind, und mit einem von dem Wellenantrieb unabhängigen und feststehenden Element sowie zwei zweiten Kraftleitelementen, die jeweils mit einem ersten Ende voneinander beabstandet am Abstützelement fixiert sind und jeweils mit einem zweiten, dem ersten jeweils gegenüberliegenden Ende an dem von dem Wellenantrieb unabhängigen und feststehenden Element voneinander beabstandet fixiert sind.

Bei aus dem Stand der Technik bekannten Kalander- beziehungsweise Walzwerksantrieben werden die Antriebsmomente über einfache Drehmomentstützten abgefangen, bei denen die Antriebe direkt mit der Walze verbunden sind und das Abfangen der Momente oftmals über die Anbindung an den Maschinenrahmen, externe Rahmen oder durch ein gegenseitiges Abfangen zweier starrer einteiliger Drehmomentstützen erfolgt. Eine Drehmomentstütze ist beispielsweise bekannt aus dem Gebrauchsmuster DE 87 12 742 U1.

Durch diese Art Drehmomentstützen mit einem einseitigen Abfangen des Moments wird eine Kraft in die Lagerung eingebracht. Bei Auftreten von Drehmomenten werden diese von der Drehmomentstütze abgefangen, indem die Drehmomentstütze als Hebelarm fungiert, an dessen Ende eine Kraft entgegenwirkt. Dadurch entsteht jedoch rückwirkend eine Kraft auf den Antrieb, wobei diese Kraft dafür sorgt, dass die Walze aus ihrer Position herausgedrängt wird und es in Abhängigkeit vom abgefangenen Antriebsmoment zu unterschiedlich hohen Einflüssen auf die Genauigkeit der Anlage kommen kann. Da die rückwirkende Kraft dabei einen Bestandteil in dieselbe Wirkrichtung wie der eigentliche Kalander hat, nimmt sie direkten Einfluss auf die Walzkraft oder den Walzspalt.

Eine weitere Problematik, die beispielsweise bei Drehmomentstützen besteht, welche gegeneinander angebunden sind, besteht darin, dass bei einer linearen Verschiebung der Walzen in horizontaler Richtung, das heißt bei Veränderung des Walzspalts, sich die Winkellage der Walzen zu einander ändert. Ferner besteht bei einer externen Anbindung der Drehmomentstütze das Problem, das heißt, wenn der Lagerpunkt der Drehmomentstütze extern fixiert ist, sich die Walzenlagerung nur begrenzt frei bewegen kann.

Wird das Drehmoment über zwei externe Punkte abgefangen, die an gegenüberliegenden Seiten des Antriebs positioniert sind, entsteht dabei zwar keine rückwirkende Kraft auf die Lagerung beziehungsweise den Antrieb. Das Problem dieser Ausführungsform einer Drehmomentstütze besteht jedoch darin, dass der Antrieb durch die Verwendung von zwei Kopplungspunkten sowohl rotatorisch als auch linear in seiner Lage fixiert ist und somit auf ihn einwirkende Bewegungen nicht komplett ausgleichen kann beziehungsweise nicht relativ zu einer weiteren Walze bewegt werden kann.

Es ist daher die Aufgabe der vorliegenden Erfindung, eine Drehmomentstütze derart zu verbessern, dass durch diese einerseits keine rückwirkenden Kräfte auf das Antriebssystem übertragen werden und andererseits ein geringerer Einfluss der Drehmomentstütze auf die Lageposition der Walzenlagerung besteht.

Diese Aufgabe wird durch die vorgeschlagene Drehmomentstütze nach Anspruch 1 beziehungsweise durch die vorgeschlagene Walzenanordnung nach Anspruch 15 gelöst. Vorteilhafte Ausführungsformen der Erfindung sind jeweils Gegenstand der abhängigen Ansprüche.

Demgemäß wird eine Drehmomentstütze zum Abfangen von Antriebsmomenten zumindest eines Wellenantriebs vorgeschlagen, mit einem Wellenantrieb und zwei ersten Kraftleitelementen, die jeweils mit einem ersten des Wellenantriebs drehbar und voneinander beabstandet fixiert sind, und mit einem von dem Wellenantrieb beabstandet angeordneten Abstützelement, an welchem die ersten Kraftleitelemente jeweils mit einem zweiten, dem ersten jeweils gegenüberliegenden Ende jeweils drehbar und voneinander beabstandet fixiert sind, und mit einem von dem Wellenantrieb unabhängigen und feststehenden Element sowie zwei zweiten Kraftleitelementen, die jeweils mit einem ersten Ende voneinander beabstandet am Abstützelement fixiert sind und jeweils mit einem zweiten, dem ersten jeweils gegenüberliegenden Ende an dem von dem Wellenantrieb unabhängigen und feststehenden Element voneinander beabstandet fixiert sind, wobei die die zwei zweiten Kraftleitelemente jeweils mit dem ersten Ende drehbar am Abstützelement fixiert sind und jeweils mit dem zweiten Ende an dem von dem Wellenantrieb unabhängigen und feststehenden Element drehbar fixiert sind. Beim Abfangen von Momenten ist dabei jeweils eines der zwei ersten Kraftleitelemente ein Druckelement und das jeweils andere ein Zugelement. Die ersten Enden der ersten Kraftleitelemente können insbesondere gegenüberliegend um die erste Antriebsachse herum angeordnet sein. Das Abstützelement kann als ein flächiges Element ausgebildet sein, welches sich im Wesentlichen in derselben Befestigungsebene erstreckt wie die Fixierpunkte der Kraftleitelemente. Die zweiten Enden der ersten Kraftleitelemente können gegenüberliegend und die ersten Enden der zweiten Kraftleitelemente können gegenüberliegend auf dem Abstützelement angeordnet sein. Die Fixierpunkte der Kraftleitelemente können insbesondere so auf dem Abstützelement angeordnet sein, dass sie die Eckpunkte eines Quadrats definieren. Dadurch können in diesem Quadrat die Eckpunkte abwechselnd von einem ersten Kraftleitelement und einem zweiten Kraftleitelement definiert werden. Das unabhängige feststehende Element kann insbesondere ein Maschinenrahmen, ein vom Kalander unabhängiger Befestigungspunkt oder ein weiterer Antrieb sein. Das Abstützelement kann insbesondere mittig unterhalb der Antriebe angeordnet und in der Ebene der Stirnflächen oder parallel zu den Stirnflächen der Antriebe ausgerichtet sein.

Der Vorteil der erfindungsgemäßen Drehmomentstütze besteht darin, dass das Drehmoment über zwei drehbare Lager, über welche die Kraftleitelemente jeweils an dem oder den Antrieben festgelegt sind, weiter an die Kraftleitelemente geleitet wird, von denen in Abhängigkeit der Drehmomentrichtung jeweils eines ein Zugelement und das andere jeweils ein Druckelement ist. Durch die drehbaren Lager ist es systemisch bedingt nur möglich, ein Drehmoment in Form einer Zugkraft und einer Druckkraft zu übertragen. Durch diesen Aufbau ist es der Drehmomentstütze nur möglich, ein Drehmoment zu übertragen. Es werden keinerlei andere Kräfte ins System eingebracht. Somit führt ein Schwanken des Antriebsmoments zu keiner Ungenauigkeit der Anlage.

Insbesondere kann die Drehmomentstütze einen zweiten, parallel zum ersten Wellantrieb angeordneten, insbesondere gegenläufigen, Wellenantrieb aufweisen, wobei die zweiten Enden der zweiten Kraftleitelemente an dem zweiten Wellenantriebe drehbar und voneinander beabstandet fixiert sein können. Dabei können die zweiten Enden der zweiten Kraftleitelemente insbesondere gegenüberliegend um die zweite Antriebsachse herum angeordnet sein. Dadurch kann sich eine spiegelsymmetrische Anordnung der beiden Antriebe und ersten und zweiten Kraftleitelemente ergeben, bei der die Symmetrieachse senkrecht durch das Abstützelement verläuft. Eine Veränderung des Walzenabstandes ist mit der erfindungsgemäßen Drehmomentstütze ebenfalls möglich, da sich das Abstützelement frei bewegen lässt. Durch eine Veränderung des Walzenabstandes würde das Abstützelement sich lediglich auf oder ab bewegen. Die Winkellage der beiden Walzen bleibt auch beim Verstellen der Walzenposition identisch.

Ferner können die Kraftleitelemente jeweils um ihre jeweiligen Fixierpunkte herum drehbar gelagert sein. Dadurch werden jeweils nur Zug- und Druckkräfte über die Kraftleitelemente auf das extern angeordnete Abstützelement geleitet, welches nur durch die drehbaren Lager am Ende der Kraftleitelemente gelagert bzw. verbunden ist. Dass die Kraftleitelemente jeweils um ihre jeweiligen Fixierpunkte herum drehbar gelagert sind, impliziert, dass die Kraftleitelemente jeweils in einer Ebene senkrecht zur Axialrichtung des zugeordneten Antriebs drehbar sind. Die Kraftleitelemente können insbesondere durch drehbare Schraubverbindungen am jeweiligen Antrieb fixiert sein. Alternativ kann zwischen jeweiligem Antrieb und dem Kraftleitelement eine Lagerung angeordnet sein. Weiterhin alternativ kann das Kraftleitelement über eine Gelenkverbindung am jeweiligen Antrieb fixiert sein.

Es kann vorgesehen sein, dass die Drehmomentstütze einen die Antriebswelle des ersten Wellenantriebs umgebenden ersten Flansch aufweist, wobei die ersten Enden der ersten Kraftleitelemente gegenüberliegend an dem ersten Flansch drehbar fixiert sind. Am Flansch des ersten Antriebs kann alternativ als Zwischenelement eine Befestigungsscheibe montiert sein, an welcher wiederum die Kraftleitelemente fixiert sind.

Es kann ferner vorgesehen sein, dass die Drehmomentstütze einen die Antriebswelle des zweiten Wellenantriebs umgebenden zweiten Flansch aufweist, wobei die zweiten Enden der zweiten Kraftleitelemente gegenüberliegend an dem zweiten Flansch drehbar fixiert sind. Auch am Flansch des zweiten Antriebs kann alternativ als Zwischenelement eine Befestigungsscheibe montiert sein, an welcher wiederum die Kraftleitelemente fixiert sind.

Die Kraftleitelemente können jeweils derart an den Antrieben befestigt sein, dass eine erste die ersten Enden der ersten Kraftleitelemente schneidende Linie und eine zweite die zweiten Enden der zweiten Kraftleitelemente schneidende Linie sich unter einem Winkel von 60°-120°, bevorzugt 80°-100°, und besonders bevorzugt 90° schneiden.

Darüber hinaus kann am Flansch des ersten oder des zweiten Antriebs zusätzlich ein Distanzstück montiert sein, an welchem die jeweiligen Enden der Kraftleitelemente fixiert sind, so dass die am Distanzstück fixierten Kraftleitelemente und die am anderen Antrieb fixierten Kraftleitelemente in senkrecht zur Axialrichtung der Antriebswellen unterschiedlichen Ebenen verlaufen. Alternativ kann beim Vorhandensein von an den Flanschen vorgesehenen Befestigungsscheiben das Distanzstück zwischen der jeweiligen Befestigungsscheibe und dem jeweiligen Flansch montiert sein. Die Befestigungsscheiben können mittels Schrauben am jeweiligen Flansch montiert sein. Das Distanzstück kann entweder unmittelbar mit dem Flansch verschraubt sein oder zu den Befestigungsscheiben fluchtende Bohrungen aufweisen, über welche das Distanzstück und die zugeordnete Befestigungsscheibe gemeinsam am Flansch verschraubt sind.

Außerdem können die vorderen Kraftleitelemente frontseitig und die hinteren Kraftleitelemente rückseitig am Abstützelement fixiert sein. Dadurch können sich die Antriebe relativ zueinander frei bewegen beziehungsweise das Abstützelement auf und ab bewegen, ohne dass eines der Kraftleitelemente eine der genannten Bewegungen behindern würde.

Ferner können die am Abstützelement fixierten Enden der Kraftleitelemente auf einem kreisrunden Umfang verteilt am Abstützelement fixiert sein beziehungsweise die Eckpunkte eines Quadrats definieren.

Außerdem kann vorgesehen sein, dass die ersten Kraftleitelemente und die zweiten Kraftleitelemente jeweils parallel zueinander angeordnet sind. Damit geht einher, dass der Abstand der Fixierpunkte der ersten Enden der Kraftleitelemente und der Abstand der Fixierpunkte der zweiten Kraftleitelemente jeweils gleich groß sind.

Ferner können sich eines der ersten und eines der zweiten Kraftleitelemente zwischen den Fixierpunkten an den Antrieben und den Fixierpunkten am Abstützelement kreuzen. Insbesondere können sich die an der den Antrieben zugewandten Seite des Abstützelements fixierten ersten und zweiten Kraftleitelemente zwischen den jeweiligen Fixierpunkten an den Antrieben und den jeweiligen Fixierpunkten am Abstützelement kreuzen. Demgegenüber kann vorgesehen sein, dass sich die jeweils anderen ersten und zweiten Kraftleitelemente nicht kreuzen.

Darüber hinaus können die zweiten Enden der ersten Kraftleitelemente und die ersten Enden der zweiten Kraftleitelemente jeweils gegenüberliegend und in regelmäßigen Abständen auf dem Abstützelement fixiert sein.

Außerdem kann durch Vergrößern des Abstands zwischen den beiden parallelen Antriebsachsen beider Antriebe das Abstützelement in Richtung der Antriebsachsen bewegt sein.

Ferner können die Kraftleitelemente stabförmig ausgebildet sein. Insbesondere können diese als Flachstäbe ausgebildet sein. Dabei können alle Kraftleitelemente dieselbe Länge aufweisen. An den ersten und zweiten Enden der ersten und zweiten Kraftleitelemente können jeweils Bohrungen vorgesehen sein, über welche die Kraftleitelemente an den jeweiligen Fixierpunkten befestigt sein können. Der Bohrungsabstand kann dabei bei allen Kraftleitelementen gleich groß sein. Die Enden der Kraftleitelemente können jeweils abgerundet sein.

Ferner kann das Abstützelement ringförmig ausgebildet sein. Insbesondere kann der Umfang des Abstützelements, auf dem die Enden der Kraftleitelemente fixiert sind, dem Umfang auf dem Flansch des ersten und/oder des zweiten Antriebs entsprechen, auf dem jeweils die jenseitigen Enden der Kraftleitelemente fixiert sind. Insbesondere kann das Abstützelement einen flachen umlaufenden Ring aufweisen, auf welchem in regelmäßigen Abständen Bohrungen zum Fixieren der Kraftleitelemente angeordnet sind. Alternativ kann das Abstützelement die Form einer runden oder polygonalen Scheibe aufweisen, solange ein wie oben beschriebenes Befestigen der Kraftleitelemente gewährleistet ist.

Ferner schlägt die Erfindung eine Walzenanordnung mit zumindest zwei parallel angeordneten, insbesondere gegenläufigen, Walzen vor, zwischen denen jeweils ein Walzspalt gebildet ist, wobei die Walzen über nebeneinander angeordnete gegenläufige Wellenantriebe angetrieben sind, aufweisend zumindest eine wie zuvor beschriebene Drehmomentstütze.

Beispielhafte Ausführungsformen der Erfindung werden anhand der nachfolgenden Figuren erläutert. Dabei zeigt:
- Fig.1: eine perspektivische Ansicht einer aus dem Stand der Technik bekannten Ausführungsform von sich gegenseitig abfangenden Drehmomentstützen;
- Fig. 2: eine Frontalansicht der aus dem Stand der Technik bekannten Ausführungsform einer Drehmomentstütze nach Figur 1;
- Fig. 3: eine Frontalansicht einer aus dem Stand der Technik bekannten Ausführungsform einer Drehmomentstütze mit einer zweiseitigen Lagerung;
- Fig. 4: eine Frontalansicht einer ersten Ausführungsform der erfindungsgemäßen Drehmomentstütze;
- Fig. 5: eine Frontalansicht einer weiteren Ausführungsform der erfindungsgemäßen Drehmomentstütze;
- Fig. 6: eine perspektivische Ansicht einer weiteren Ausführungsform der erfindungsgemäßen Drehmomentstütze;
- Fig. 7: eine Frontalansicht der Ausführungsform der erfindungsgemäßen Drehmomentstütze gemäß Figur 6;
- Fig. 8: eine perspektivische Ansicht einer weiteren Ausführungsform der erfindungsgemäßen Drehmomentstütze;
- Fig. 9: eine Frontalansicht der Ausführungsform der erfindungsgemäßen Drehmomentstütze gemäß Figur 8.

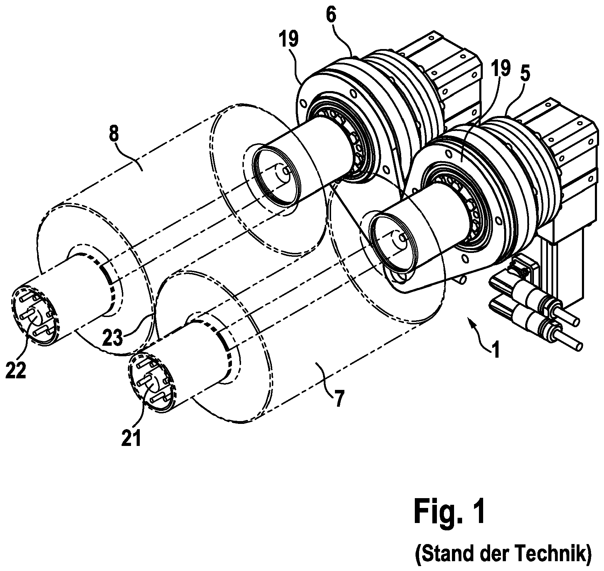

Figur 1 zeigt eine aus dem Stand der Technik bekannte Lösung einer Drehmomentstütze 1 zum Abfangen von Drehmomenten, bei der die an Kalander- beziehungsweise Walzwerksantrieben 5, 6 auftretenden Antriebsmomente über sich gegenseitig abstützende Drehmomentstützen abgefangen werden, welche einerseits jeweils starr an einem Flansch 19 des Antriebs 5,6 befestigt sind und gegenüberliegend in einem gemeinsamen Fixierpunkt drehbar aneinander verankert sind. Die Antriebe 5, 6 sind direkt mit den jeweiligen Walzen 7, 8 verbunden. Die Antriebsachsen 21, 22 sind parallel zueinander ausgerichtet, so dass zwischen den Walzen 7, 8 ein äquidistanter Walzspalt 23 ausgebildet ist.

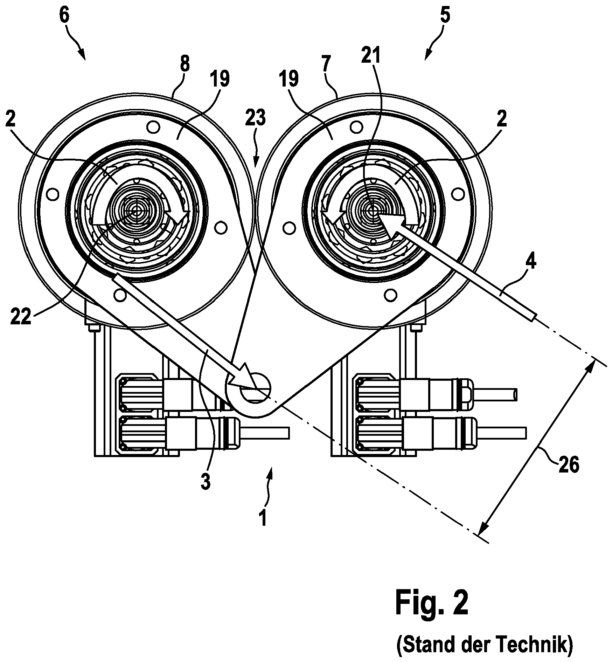

Wie aus Figur 2 hervorgeht, wird durch dieses einseitige Abfangen der Kräfte stets eine Kraft in die entsprechende Lagerung induziert. Beispielhaft wird in Figur 2 nur die rechte Antriebsseite 5 erläutert. Sobald antriebsseitig ein Drehmoment 2 erzeugt wird, wird das Drehmoment 2 von der Drehmomentstütze 1 des rechten Antriebs 5 über die Kraft 3 und den Hebelarm 26 abgefangen. Dadurch entsteht jedoch eine rückwirkende Kraft 4 auf den Antrieb 5. Diese Kraft 4 sorgt dafür, dass die Walze 7 aus ihrer Position herausgedrängt wird und es je nach Größe des Antriebsmoments zu verschieden hohen Auswirkungen auf die Genauigkeit der Anlage kommen kann. Da die rückwirkende Kraft 4 einen Bestandteil in dieselbe Wirkrichtung wie die Zustellrichtung des Kalanders hat, nimmt sie dabei direkten Einfluss auf die Walzkraft beziehungsweise den Walzspalt 23.

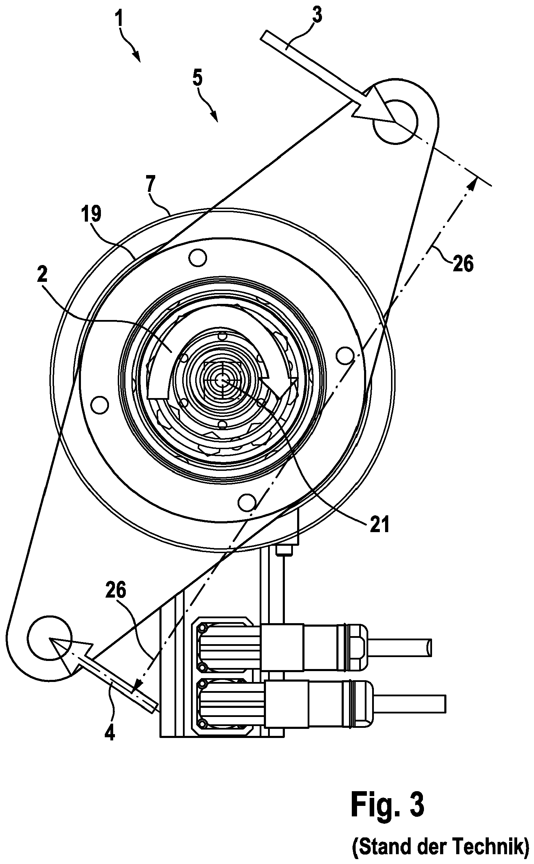

Das in Figur 3 gezeigt Ausführungsbeispiel einer Drehmomentstütze 1 weist gegenüber dem Beispiel aus Figur 1 und 2 eine zweiseitige Verankerung auf, bei der die Drehmomentstütze 1 zwei entgegengesetzte Hebelarme 26 gleicher Länge aufweist. Durch eine zweiseitig gelagerte Drehmomentstütze 1 wird erreicht, dass sich die das Drehmoment abfangende Kraft 3 und die rückwirkende Kraft 4 gegenseitig aufheben und dadurch keine Kraft auf die Lagerung einwirkt und es nicht zu einer Beeinflussung des Walzspalts 23 kommt. Dabei ist der Antrieb 5 jedoch in nachteiliger Weise durch zwei Punkte in seiner Lage fixiert und kann somit die Bewegungen nicht komplett ausgleichen.

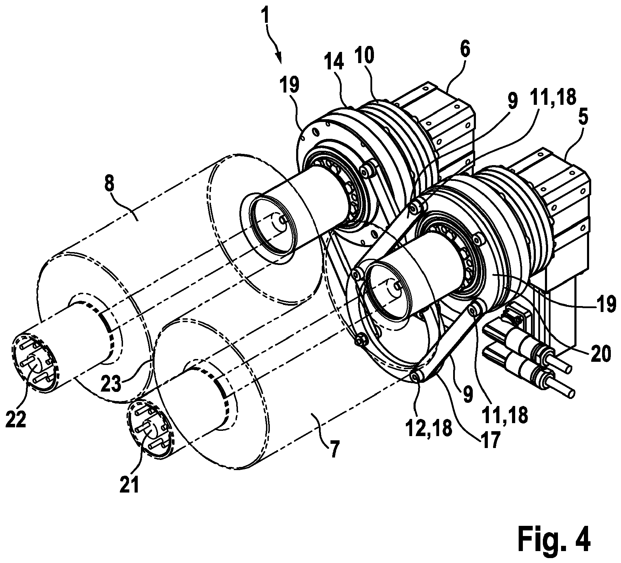

Das in Figur 4 dargestellte erste Ausführungsbeispiel der erfindungsgemäßen Drehmomentstütze 1 zeigt einen Wellenantrieb 5 mit einer ersten Walze 7, bei der die Drehmomentabstützung über ein Abstützelement 17 erfolgt, das einerseits über zwei erste Kraftleitelemente 9 mit einem Flansch 19 des Antriebs verbunden ist und andererseits über zwei zweite Kraftleitelemente 10 mit zwei Festlagern 27 verbunden ist. Die Festlager 27 können externe, das heißt vom Wellenantrieb 5 entkoppelte, Elemente sein, wie beispielsweise der Maschinenrahmen der Maschine oder andere als Festlager geeignete Strukturen. Die ersten Kraftleitelemente 9 sind mit ersten Enden 11 an Fixierpunkten 18 am Flansch 19 des ersten Wellenantriebs 5 drehbar befestigt, wobei drehbar dabei insbesondere in einer Ebene senkrecht zur Wellenantriebsachse 21 bedeutet. Die ersten Kraftleitelemente sind mit zweiten Enden 12 an Fixierpunkten 18 auf dem Abstützelement 17 ebenfalls drehbar befestigt. Die Kraftleitelemente 9 verlaufen dabei parallel zueinander. Dies bedeutet, dass die Fixierpunkte 18 auf dem Flansch 19 einerseits und dem Abstützelement 18 andererseits jeweils denselben Abstand zueinander aufweisen. Die Kraftleitelemente sind als Flachstäbe ausgebildet, welche bevorzugt aus Metall bestehen. Das Abstützelement 17 ist ringförmig aus einem Flachteil gebildet, das insbesondere dieselbe Breite wie die Kraftleitelemente aufweist. Der Ringdurchmesser entspricht im Mittel insbesondere dem Abstand der Fixierpunkte 18. Die ersten Kraftleitelemente 9 sind gegenüberliegend auf dem Abstützelement 17 angeordnet. Die zweiten Kraftleitelemente 10 sind bevorzugt um jeweils 90 ° versetzt zu den ersten Kraftleitelementen 9 drehbar mit ersten Enden 13 an Fixierpunkten 18 auf dem Abstützelement 17 befestigt. Dadurch sind die zweiten Kraftleitelemente 10 ebenfalls gegenüberliegend auf dem Abstützelement 17 angeordnet. Mit zweiten Enden 14 sind die zweiten Kraftleitelemente 10 drehbar an Fixierpunkten 18 befestigt, die insbesondere als Festlager 27 ausgebildet sind. Die Abstände der Fixierpunkte 18 der zweiten Kraftleitelemente 10 sind ebenfalls gleich, so dass auch die zweiten Kraftleitelemente 10 parallel zueinander verlaufen. Durch eine derartige Anordnung wird erreicht, dass die Kraftleitelemente jeweils nur Druck- oder Zugspannungen übertragen, nicht hingegen Drehmomente. Dadurch wird gegenüber herkömmlichen Drehmomentstützen die Auslenkung des Antriebs aus seiner Soll-Position auf Grund von großen Drehmomenten deutlich reduziert.

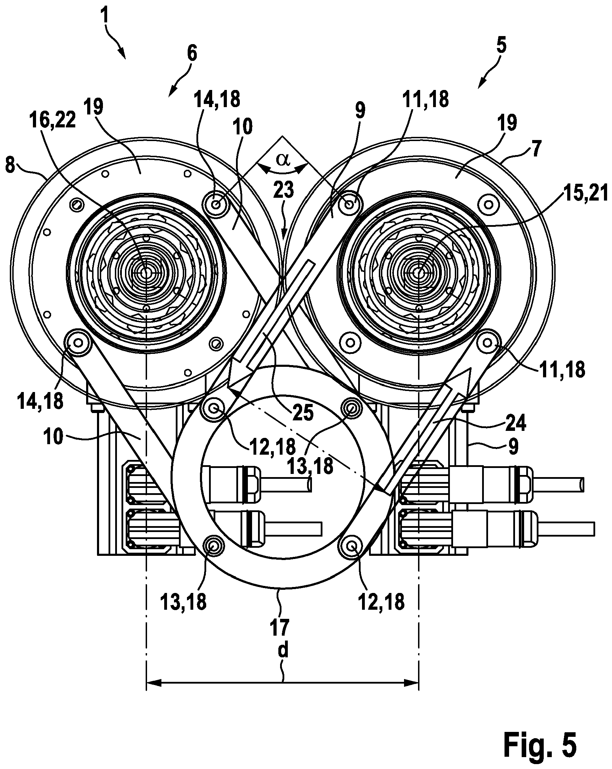

Figur 5 zeigt eine weitere Ausführungsform der Drehmomentstütze 1, bei der zwei Wellenantriebe 5, 6 beziehungsweise zwei durch die Wellenantriebe 5, 6 angetriebene Walzen 7, 8 parallel zueinander angeordnet sind und einen gemeinsamen Walzspalt 23 zwischen sich ausbilden. Dadurch ist die Antriebsrichtung der Antriebe 5, 6 immer gegenläufig zueinander. Jeder der Antriebe 5, 6 weist dabei eine separate Drehmomentstütze 1 auf, das heißt, jeder Antrieb 5, 6 weist separate erste und zweite Kraftleitelemente 9, 10 und separate Abstützelemente 17 auf. Die zweiten Kraftleitelemente 10 sind jeweils mit ihren zweiten Enden 14 an separaten Festlagern 27 drehbar festgelegt. Durch die Drehmomentstützen 1 wird bewirkt, dass die Auslenkung der Antriebe 5, 6 aus ihren Soll-Positionen auch bei großen Drehmomenten beispielsweise bei Lastwechseln vermieden wird, so dass der Abstand d zwischen den Wellenantriebsachsen und dementsprechend die Zustellung im Walzspalt 23 gleich bleibt.

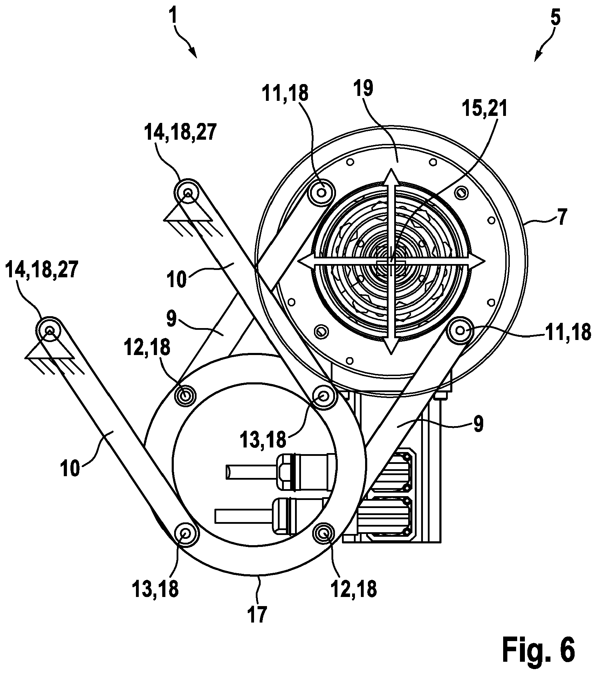

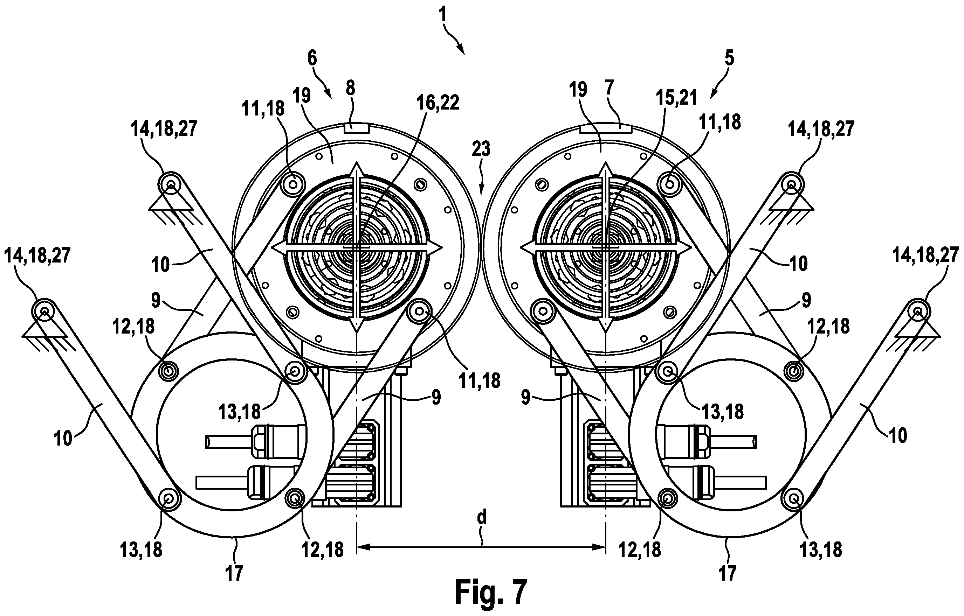

Bei einer weiteren Ausführungsform der Drehmomentstütze 1, dargestellt in den Figuren 6 und 7, weisen die beiden gegenläufigen Antriebe 5, 6 eine gemeinsame Drehmomentstütze 1 auf, so dass sich beide Antriebe 5, 6 gegenseitig abstützen. Dabei wird das Moment 2 nunmehr über jeweils zwei parallele an den Antrieben 5, 6 fixierte Kraftleitelemente 9, 10 abgeführt, welche mit ihren jenseitigen Enden 12, 13 jeweils an einem ringförmigen Abstützelement 17 fixiert sind. Dabei sind die als Flachstäbe ausgeführten Kraftleitelemente 9, 10 in ihren Fixierpunkten 18 jeweils rotatorisch gelagert. Dadurch dienen die Kraftleitelemente 9, 10 lediglich zum Übertragen von Zug- oder Druckkräften, nicht hingegen zum Übertragen eines Drehmoments auf das Abstützelement 17. Daraus resultiert schließlich, dass keine rückwirkenden Kräfte auf die Antriebe 5, 6 wirken, so dass es auch bei hohen Drehmomenten zu keiner Beeinflussung des Walzspalts 23 kommt.

Dazu sind an einem Flansch 19 des ersten Antriebs 5 radial gegenüberliegend zwei erste Enden 11 von ersten Kraftleitelementen 9 orthogonal zur ersten Antriebsachse 21 drehbar an Fixierpunkten 18 fixiert. Die ersten Kraftleitelemente 9 sind als Flachstäbe ausgebildet und weisen dieselbe Länge auf und sind jeweils mit gegenüberliegenden zweiten Enden 12 auf dem Umfang eines ringförmigen Abstützelements 17 an jeweiligen Fixierpunkten 18 drehbar am Abstützelement 17 fixiert. Die ersten Kraftleitelemente 9 sind dabei parallel zur Ebene drehbar, in der sich das Abstützelement 17 erstreckt. Die Fixierpunkte 18 auf dem Flansch 19 und die Fixierpunkte 18 auf dem Abstützelement 17 der ersten Kraftleitelemente 9 weisen jeweils dieselben Abstände auf, sodass die beiden ersten Kraftleitelemente 9 parallel zueinander verlaufen.

Am Flansch 19 des zweiten Antriebs 6 sind radial gegenüberliegend zwei zweite Enden 14 von zweiten Kraftleitelementen 10 orthogonal zur zweiten Antriebsachse 22 drehbar an Fixierpunkten 18 fixiert. Die zweiten Kraftleitelemente 10 sind ebenfalls als Flachstäbe ausgebildet und weisen dieselbe Länge wie die ersten Kraftleitelemente 9 auf und sind jeweils mit gegenüberliegenden ersten Enden 13 auf dem Umfang des ringförmigen Abstützelements 17 an jeweiligen Fixierpunkten 18 drehbar am Abstützelement 17 fixiert. Die zweiten Kraftleitelemente 10 sind dabei parallel zur Ebene drehbar, in der sich das Abstützelement 17 erstreckt. Die Fixierpunkte 18 auf dem Flansch 19 und die Fixierpunkte 18 auf dem Abstützelement 17 der zweiten Kraftleitelemente 10 weisen ebenfalls jeweils dieselben Abstände auf, sodass auch die beiden zweiten Kraftleitelemente 10 parallel zueinander verlaufen. Eine die Fixierpunkte 18 der ersten Kraftleitelemente 9 auf dem Flansch 19 des ersten Antriebs 5 verbindende Gerade und eine die Fixierpunkte 18 der zweiten Kraftleitelemente 10 auf dem Flansch 19 des zweiten Antriebs 6 verbindende Gerade schneiden sich oberhalb der Walzenanordnung unter einem Winkel α. Durch Einstellung des Winkels kann der vertikale Abstand des Abstützelements 17 von den parallelen Antriebsachsen 21, 22 der Walzenanordnung eingestellt werden. Das ringförmige Abstützelement 17 ist aus einem flachen Ring gebildet, über dessen Umfang verteilt abwechselnd Fixierpunkte 18 der ersten und der zweiten Kraftleitelemente 9, 10 angeordnet sind, wobei die ersten Kraftleitelemente 9 frontseitig und die zweiten Kraftleitelemente 10 rückseitig am Abstützelement 17 fixiert sind, so dass sich die Kraftleitelemente 9, 10 nicht gegenseitig behindern. Beispielsweise kreuzen sich das obere erste Kraftleitelement 9 und das obere zweite Kraftleitelement 10 auf deren Strecken zwischen den jeweiligen Fixierpunkten 18 am jeweiligen Flansch 19 und am Abstützelement 17, wobei das erste Kraftleitelement 9 vor dem zweiten Kraftleitelement 10 verläuft und sich beide nicht im jeweiligen Bewegungsspielraum beeinträchtigen. Damit einhergehend ist am Flansch 19 des ersten Antriebs 5 ein Distanzstück 20 in Form einer flachen Scheibe vorgesehen, das unterhalb des Befestigungselements, an welchem die ersten Kraftleitelemente 9 am ersten Antrieb 5 fixiert sind, montiert ist. Das Distanzstück 20 weist dabei in etwa die Summe der Dicken der zweiten Kraftleitelemente 10 und dem Abstützelement 17 auf, um den entstehenden Dickenunterschied auszugleichen.

Eine Veränderung des Abstands d der Antriebsachsen 21, 22 beziehungsweise des Walzspalts 23 ist ebenfalls möglich, da das Abstützelement 17 durch die drehbare Lagerung der Kraftleitelemente 9, 10 auf und ab bewegen lässt. Dabei kann die Winkellage der beiden Walzen 7, 8 auch beim Verstellen des Walzenabstands beibehalten werden.

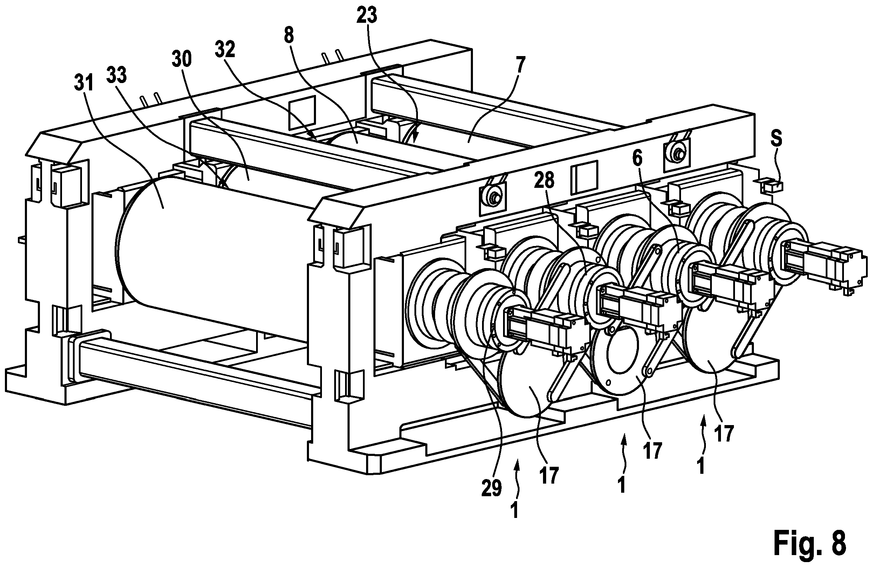

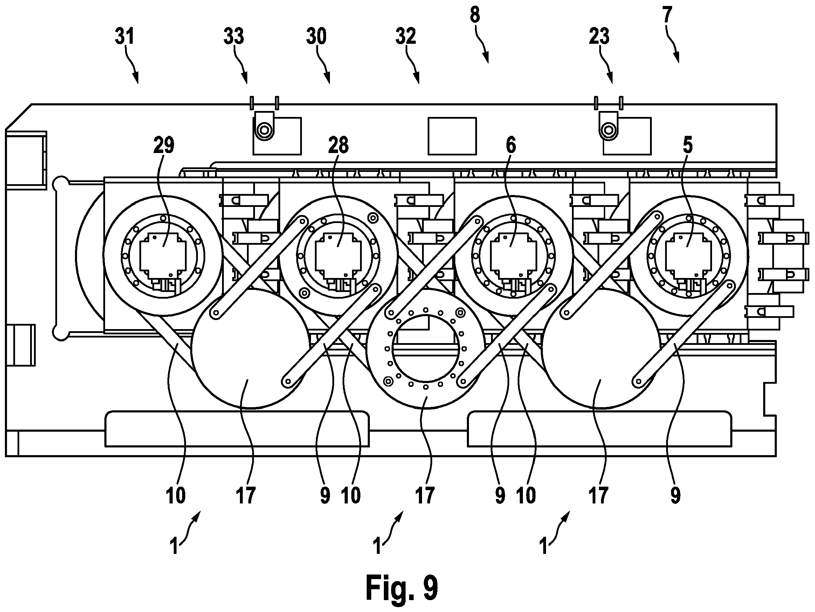

Eine weitere Ausführungsform der Erfindung zeigen die Figuren 8 und 9, bei welcher vier Walzen 7, 8, 30, 31 unter Ausbildung von drei Walzspalten 23, 32, 33 parallel zueinander angeordnet sind. Benachbarte Walzen sind dabei jeweils gegenläufig. Insbesondere sind bei der gezeigten Anordnung drei Drehmomentstützen 1 mit drei Abstützelementen 17 vorgesehen, die jeweils unterhalb zwischen zwei Walzen angeordnet sind. Bei dieser Ausführungsform sind beiden innenliegenden Wellenantrieben 6, 28 jeweils zwei benachbarte Drehmomentstützen 1 zugeordnet. Dadurch sind an den Flanschen 19 der Antriebe 6, 28 jeweils vier Kraftleitelemente 9, 10 drehbar befestigt, wobei zwei erste Kraftleitelemente 9 an einem links unterhalb angeordneten Abstützelement 17 und zwei zweite Kraftleitelemente 10 an einem rechts unterhalb angeordneten Abstützelement 17 befestigt sind. In der gezeigten Ausführungsform verlaufen die ersten Kraftleitelemente 9 dabei jeweils in einer Ebene frontseitig der Abstützelemente 17 und die zweiten Kraftleitelemente 10 in einer Ebene rückseitig der Abstützelemente 17. An den Antrieben 5, 6, 28, 29 sind dazu entsprechende Distanzstücke 20 installiert, durch welche unterschiedliche Befestigungsebenen für die ersten und zweiten Kraftleitelemente 9, 10 bereitgestellt sind. Es ist selbstverständlich, dass das Prinzip der dargestellten Ausführungsform alternativ auf beliebig viele nebeneinander angeordnete Wellenantriebe angewendet werden kann.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Drehmomentstütze
- 2: Drehmoment
- 3: abfangende Kraft
- 4: rückwirkende Kraft auf Antrieb
- 5: erster Wellenantrieb
- 6: zweiter Wellenantrieb
- 7: erste Walze
- 8: zweite Walze
- 9: erstes Kraftleitelement
- 10: zweites Kraftleitelement
- 11: erstes Ende des ersten Kraftleitelements
- 12: zweites Ende des ersten Kraftleitelements
- 13: erstes Ende des zweiten Kraftleitelements
- 14: zweites Ende des zweiten Kraftleitelements
- 15: erste Antriebswelle
- 16: zweite Antriebswelle
- 17: Abstützelement
- 18: Fixierpunkt
- 19: Flansch
- 20: Distanzstück
- 21: erste Antriebsachse
- 22: zweite Antriebsachse
- 23: Walzspalt
- 24: Zugkraft
- 25: Druckkraft
- 26: Hebelarm
- 27: Festlager
- 28: dritter Wellenantrieb
- 29: vierter Wellenantrieb
- 30: dritte Walze 31 vierte Walze
- 32: zweiter Walzspalt
- 33: dritter Walzspalt
- d: Abstand zwischen den Antrieben
- α: Winkel zwischen Fixierpunktachsen

## Patentansprüche

1. Drehmomentstütze (1) zum Abfangen von Antriebsmomenten zumindest eines Wellenantriebs (5),
mit einem Wellenantrieb (5) und zwei ersten Kraftleitelementen (9), die jeweils mit einem ersten Ende (11) des Wellenantriebs (5) drehbar und voneinander beabstandet fixiert sind,
und mit einem von dem Wellenantrieb (5) beabstandet angeordneten Abstützelement (17), an welchem die ersten Kraftleitelemente (9) jeweils mit einem zweiten, dem ersten jeweils gegenüberliegenden Ende (12) jeweils drehbar und voneinander beabstandet fixiert sind,
und mit einem von dem Wellenantrieb (5) unabhängigen und feststehenden Element sowie zwei zweiten Kraftleitelementen (10), die jeweils mit einem ersten Ende (13) voneinander beabstandet am Abstützelement (17) fixiert sind und jeweils mit einem zweiten, dem ersten jeweils gegenüberliegenden Ende (14) an dem von dem Wellenantrieb (5) unabhängigen und feststehenden Element voneinander beabstandet fixiert sind, **dadurch gekennzeichnet,**
**dass** die zwei zweiten Kraftleitelemente (10) jeweils mit dem ersten Ende (13) drehbar am Abstützelement (17) fixiert sind und jeweils mit dem zweiten Ende (14) an dem von dem Wellenantrieb (5) unabhängigen und feststehenden Element drehbar fixiert sind.

2. Drehmomentstütze (1) nach Anspruch 1, mit einem zweiten, parallel zum ersten Wellantrieb (5) angeordneten, insbesondere gegenläufigen, Wellenantrieb (6), wobei die zweiten Enden (14) der zweiten Kraftleitelemente (10) an dem zweiten Wellenantrieb (6) drehbar und voneinander beabstandet fixiert sind.

3. Drehmomentstütze (1) nach Anspruch 1 oder 2, wobei die Kraftleitelemente (9, 10) jeweils um ihre jeweiligen Fixierpunkte (18) herum drehbar gelagert sind.

4. Drehmomentstütze (1) nach einem der vorangehenden Ansprüche, mit einem die Antriebswelle des ersten Wellenantriebs (5) umgebenden ersten Flansch (19), wobei die ersten Enden (11) der ersten Kraftleitelemente (9) gegenüberliegend an dem ersten Flansch (19) drehbar fixiert sind.

5. Drehmomentstütze (1) nach einem der Ansprüche 2 bis 4, mit einem die Antriebswelle des zweiten Wellenantriebs (6) umgebenden zweiten Flansch (19), wobei die zweiten Enden (14) der zweiten Kraftleitelemente (10) gegenüberliegend an dem zweiten Flansch (19) drehbar fixiert sind.

6. Drehmomentstütze (1) nach einem der Ansprüche 2 bis 5, wobei am Flansch (19) des ersten oder des zweiten Antriebs (5, 6) zusätzlich ein Distanzstück (20) montiert ist, an welchem die jeweiligen Enden der Kraftleitelemente (9, 10) fixiert sind, so dass die am Distanzstück (20) fixierten Kraftleitelemente (9, 10) und die am anderen Antrieb fixierten Kraftleitelemente (9, 10) in senkrecht zur Axialrichtung der Antriebswellen unterschiedlichen Ebenen verlaufen.

7. Drehmomentstütze (1) nach Anspruch 6, wobei die vorderen Kraftleitelemente (9) frontseitig und die hinteren Kraftleitelemente (10) rückseitig am Abstützelement (17) fixiert sind.

8. Drehmomentstütze (1) nach einem der vorangehenden Ansprüche, wobei die am Abstützelement (17) fixierten Enden (12, 13) der Kraftleitelemente (9, 10) auf einem kreisrunden Umfang verteilt am Abstützelement (17) fixiert sind.

9. Drehmomentstütze (1) nach einem der vorangehenden Ansprüche, wobei die ersten Kraftleitelemente (9) und die zweiten Kraftleitelemente (10) jeweils parallel zueinander angeordnet sind.

10. Drehmomentstütze (1) nach einem der Ansprüche 2 bis 9, wobei sich eines der ersten und eines der zweiten Kraftleitelemente (9, 10) zwischen den Fixierpunkten (18) an den Antrieben (5, 6) und den Fixierpunkten (18) am Abstützelement (17) kreuzen.

11. Drehmomentstütze (1) nach einem der Ansprüche 2 bis 10, wobei die zweiten Enden (12) der ersten Kraftleitelemente (9) und die ersten Enden (13) der zweiten Kraftleitelemente (10) jeweils gegenüberliegend und in regelmäßigen Abständen auf dem Abstützelement (17) fixiert sind.

12. Drehmomentstütze (1) nach einem der Ansprüche 2 bis 11, wobei durch Vergrößern des Abstands (d) zwischen den beiden parallelen Antriebsachsen (21, 22) beider Antriebe (5, 6) das Abstützelement (17) in Richtung der Antriebsachsen (21, 22) bewegt ist.

13. Drehmomentstütze (1) nach einem der vorangehenden Ansprüche, wobei die Kraftleitelemente (9, 10) stabförmig ausgebildet sind.

14. Drehmomentstütze (1) nach einem der vorangehenden Ansprüche, wobei das Abstützelement (17) ringförmig ausgebildet ist.

15. Walzenanordnung mit zumindest zwei parallel angeordneten, insbesondere gegenläufigen, Walzen (7, 8), zwischen denen jeweils ein Walzspalt (23) gebildet ist, wobei die Walzen (7, 8) über nebeneinander angeordnete gegenläufige Wellenantriebe (5, 6) angetrieben sind, aufweisend zumindest eine Drehmomentstütze (1) nach einem der vorangehenden Ansprüche.

## Claims

1. A torque support (1) for absorbing drive torques of at least one shaft drive (5),
with a shaft drive (5) and two first force-conducting elements (9), each of which is rotatably fixed to a first end (11) of the shaft drive (5) at a distance from one another,
and with a support element (17), arranged at a distance from the shaft drive (5), to which the first force-conducting elements (9) are each rotatably fixed and at a distance from one another by a second end (12), which is opposite the first end,
and with a fixed element independent of the shaft drive (5) and two second force-conducting elements (10), which are each fixed at a distance from one another by a first end (13) to the support element (17) and are each fixed at a distance from one another by a second end (14), which is opposite the first end, to the fixed element which is independent of the shaft drive (5),
**characterized in that**
the two second force conducting elements (10) are each rotatably fixed with the first end (13) to the support element (17) and are each rotatably fixed with the second end (14) to the fixed element, independent of the shaft drive (5).

2. The torque support (1) according to claim 1, with a second, in particular counter-rotating, shaft drive (6) arranged parallel to the first shaft drive (5), wherein the second ends (14) of the second force-conducting elements (10) are rotatably fixed to the second shaft drive (6) and at a distance from one another.

3. The torque support (1) according to claim 1 or 2, wherein the force-conducting elements (9, 10) are each rotatably mounted around their respective fixing points (18) .

4. The torque support (1) according to any one of the preceding claims, with a first flange (19) surrounding the drive shaft of the first shaft drive (5), wherein the first ends (11) of the first force-conducting elements (9) are rotatably fixed opposite each other to the first flange (19).

5. The torque support (1) according to any one of claims 2 to 4, with a second flange (19) surrounding the drive shaft of the second shaft drive (6), wherein the second ends (14) of the second force-conducting elements (10) are rotatably fixed opposite to the second flange (19) .

6. The torque support (1) according to any one of claims 2 to 5, wherein additionally a spacer (20) is mounted on the flange (19) of the first or of the second drive (5, 6), to which the respective ends of the force-conducting elements (9, 10) are fixed, such that the force-conducting elements (9, 10), fixed to the spacer (20), and the force-conducting elements (9, 10), fixed to the other drive, run in planes which differ perpendicularly to the axial direction of the drive shafts.

7. The torque support (1) according to claim 6, wherein the front force-conducting elements (9) are fixed to the front side and the rear force-conducting elements (10) are fixed to the rear side of the support element (17).

8. The torque support (1) according to any one of the preceding claims, wherein the ends (12, 13) of the force-conducting elements (9, 10), fixed to the support element (17), are fixed to the support element (17) distributed on a circular circumference.

9. The torque support (1) according to any one of the preceding claims, wherein the first force-conducting elements (9) and the second force-conducting elements (10) are arranged parallel to one another.

10. The torque support (1) according to any one of claims 2 to 9, wherein one of the first and one of the second force-conducting elements (9, 10) cross between the fixing points (18) on the drives (5, 6) and the fixing points (18) on the support element (17).

11. The torque support (1) according to any one of claims 2 to 10, wherein the second ends (12) of the first force-conducting elements (9) and the first ends (13) of the second force-conducting elements (10) are respectively fixed opposite each other and at regular intervals on the support element (17).

12. The torque support (1) according to any one of claims 2 to 11, wherein by increasing the distance (d) between the two parallel drive axes (21, 22) of both drives (5, 6), the support element (17) is moved in the direction of the drive axes (21, 22).

13. The torque support (1) according to any one of the preceding claims, wherein the force-conducting elements (9, 10) are rod-shaped.

14. The torque support (1) according to any one of the preceding claims, wherein the support element (17) is annular.

15. A roller arrangement with at least two parallel, in particular counter-rotating, rollers (7, 8), between each of which a nip (23) is formed, wherein the rollers (7, 8) are driven via counter-rotating shaft drives (5, 6) arranged next to one another, having at least one torque support (1) according to any one of the preceding claims.

## Revendications

1. Support de couple (1) destiné à l'interception de couples d'entraînement d'au moins un entraînement (5) d'arbre,
comportant un entraînement (5) d'arbre et deux premiers éléments de transmission de force (9) qui sont fixés chacun par une première extrémité (11) de l'entraînement (5) d'arbre de manière à pouvoir tourner et à distance l'un de l'autre,
et comportant un élément de support (17) disposé à distance de l'entraînement (5) d'arbre, sur lequel les premiers éléments de transmission de force (9) sont fixés chacun par une seconde extrémité (12) chaque fois opposée à la première, chacun de manière à pouvoir tourner et à distance l'un de l'autre,
et comportant un élément fixe et indépendant de l'entraînement (5) d'arbre ainsi que deux seconds éléments de transmission de force (10), qui sont fixés chacun par une première extrémité (13) à l'élément de support (17), à distance l'un de l'autre, et sont fixés chacun par une seconde extrémité (14) chaque fois à l'opposé de la première, à l'élément fixe et indépendant de l'entraînement (5) d'arbre,
**caractérisé en ce que**
les deux seconds éléments de transmission de force (10) sont fixés chacun par la première extrémité (13), de manière à pouvoir tourner, à l'élément de support (17) et sont fixés chacun par la seconde extrémité (14), de manière à pouvoir tourner, à l'élément fixe et indépendant de l'entraînement (5) d'arbre.

2. Support de couple (1) selon la revendication 1, comportant un deuxième entraînement (6) d'arbre, en particulier contrarotatif, disposé parallèlement au premier entraînement (5) d'arbre, dans lequel les secondes extrémités (14) des seconds éléments de transmission de force (10) sont fixées au deuxième entraînement (6) d'arbre de manière à pouvoir tourner et à distance l'une de l'autre.

3. Support de couple (1) selon la revendication 1 ou 2, dans lequel les éléments de transmission de force (9, 10) sont placés chacun de manière à pouvoir tourner autour de leurs points de fixation (18) respectifs.

4. Support de couple (1) selon l'une quelconque des revendications précédentes, comportant une première bride (19) entourant l'arbre d'entraînement du premier entraînement (5) d'arbre, dans lequel les premières extrémités (11) des premiers éléments de transmission de force (9) sont fixées en se faisant face, de manière à pouvoir tourner, à la première bride (19).

5. Support de couple (1) selon l'une quelconque des revendications 2 à 4, comportant une deuxième bride (19) entourant l'arbre d'entraînement du deuxième entraînement (6) d'arbre, dans lequel les secondes extrémités (14) des seconds éléments de transmission de force (10) sont fixées en se faisant face, de manière à pouvoir tourner, à la deuxième bride (19).

6. Support de couple (1) selon l'une quelconque des revendications 2 à 5, dans lequel est en outre monté sur la bride (19) du premier ou du deuxième entraînement (5, 6) une pièce intercalaire (20), à laquelle sont fixées les extrémités respectives des éléments de transmission de force (9, 10), de sorte que les éléments de transmission de force (9, 10) fixés à la pièce intercalaire (20) et les éléments de transmission de force (9, 10) fixés à l'autre entraînement s'étendent dans des plans différents perpendiculairement à la direction axiale des arbres d'entraînement.

7. Support de couple (1) selon la revendication 6, dans lequel les éléments de transmission de force avant (9) et les éléments de transmission de force arrière (10) dont fixés à l'arrière de l'élément de support (17) .

8. Support de couple (1) selon l'une quelconque des revendications précédentes, dans lequel les extrémités (12, 13) des éléments de transmission de force (9, 10) fixées à l'élément de support (17) sont fixées à l'élément de support (17) en étant réparties sur un pourtour circulaire.

9. Support de couple (1) selon l'une quelconque des revendications précédentes, dans lequel les premiers éléments de transmission de force (9) et les seconds éléments de transmission de force (10) sont chaque fois disposés parallèlement les uns aux autres.

10. Support de couple (1) selon l'une quelconque des revendications 2 à 9, dans lequel l'un des premiers et l'un des seconds éléments de transmission de force (9, 10) se croisent entre les points de fixation (18) aux entraînements (5, 6) et les points de fixation (18) à l'élément de support (17).

11. Support de couple (1) selon l'une quelconque des revendications 2 à 10, dans lequel les secondes extrémités (12) des premiers éléments de transmission de force (9) et les premières extrémités (13) des seconds éléments de transmission de force (10) sont fixées chacune en se faisant face et à intervalles réguliers sur l'élément de support (17).

12. Support de couple (1) selon l'une quelconque des revendications 2 à 11, dans lequel, par augmentation de la distance (d) entre les deux axes d'entraînement parallèles (21, 22) des deux entraînements (5, 6), l'élément de support (17) est déplacé en direction des axes d'entraînement (21, 22).

13. Support de couple (1) selon l'une quelconque des revendications précédentes, dans lequel les éléments de transmission de force (9, 10) sont configurés en forme de barre.

14. Support de couple (1) selon l'une quelconque des revendications précédentes, dans lequel l'élément de support (17) a une configuration annulaire.

15. Dispositif à rouleaux comportant au moins deux rouleaux (7, 8) disposés en parallèle, en particulier contrarotatifs, entre lesquels est chaque fois formée une emprise (23), dans lequel les rouleaux (7, 8) sont entraînés par des entraînements (5, 6) d'arbres contrarotatifs disposés l'un/les uns à côté de l'autre/des autres, comportant au moins un support de couple (1) selon l'une quelconque des revendications précédentes.
